# EUROPEAN PATENT SPECIFICATION

(11) **EP 2 458 247 B1**
(45) Date of publication and mention of the grant of the patent: **06.05.2015**
(21) Application number: 11189663.5
(22) Date of filing: 18.11.2011
(51) Int. Cl.: F16H 37/04, F16H 57/021

(54) **Basic gearbox and range gearbox for motor vehicle**
Grundgetriebe und Bereichsgetriebe für Kraftfahrzeug
Boîte de vitesses basique et boîte de vitesses de gamme pour véhicule à moteur

(30) Priority: 29.11.2010 SE 1051248
(43) Date of publication of application: 30.05.2012
(73) Proprietor: Scania CV AB, 151 87 Södertälje (SE)
(72) Inventor: Forsberg, Jörgen, 120 52 Årsta (SE)
(74) Representative: Scania CV AB

(56) References cited:
- EP-A1- 0 916 871
- WO-A1-01/86172
- US-A- 4 416 168
- US-A- 4 440 042
- US-A- 4 713 980

## Description

### Technical field

The present invention relates according to a first aspect to a range gearbox situated between a basic gearbox and an output shaft. The invention relates also according to a second aspect to a corresponding basic gearbox. The range gearbox is adapted to switching between two gear ratios and thereby, in conjunction with the basic gearbox, doubling the number of ratios. In particular, the invention relates to a device for absorbing forces from a range gearbox with a planetary gear with helical teeth.

### Background

A known practice in transmission systems for heavy vehicles, e.g. trucks and buses, is to connect an extra gearbox to the vehicle's basic gearbox with the object of doubling the number of possible gear ratios (see for example WO 9620359). Such a gearbox is usually called supplementary gearbox or range gearbox.

The range gearbox usually comprises a planetary gear by which changes of gear ratio can be effected between a high-range state and a low-range state. In the low-range state the ratio change in the planetary gear is used, but in the high-range state no change of ratio takes place through the planetary gear. For various reasons, e.g. to keep down the noise level or optimise the transfer of power between the various gearwheels, it is advantageous to use gearwheels with helical teeth. A problem pertaining to use of helical teeth is that they give rise to axial forces which cause a driving shaft, often the mainshaft of a basic gearbox, to be pushed in one direction while the ring gear, which bears against the gearbox housing, is pushed in an opposite direction.

Conventionally, the forces on the mainshaft are absorbed by the basic gearbox. There is a problem, however, in that the space in the basic gearbox is limited, with consequently no room for large force-absorbing bearings within the gearbox.

Specification EP 1 282 791 B1 describes a solution according to the preamble of claim 1, whereby the teeth of the sun wheel are so directed that the forces which occur on the mainshaft in low-range state are directed away from the basic gearbox. They thus coincide with the forces which normally occur in the basic gearbox and which are absorbed by a mainshaft rear bearing situated against the inside of the gearbox housing. Almost all of the force absorption for the mainshaft is thus concentrated at a single bearing. In all gearboxes, however, forces occur in both directions on the mainshaft, depending on current operating state. A mainshaft forward bearing at the opposite end of the mainshaft and the bearing of the input shaft have to be configured to be able to absorb forces in the opposite direction. Consequently there is a need for an alternative configuration whereby the force absorption can take place satisfactorily, preferably without subjecting the mainshaft forward bearing and the input bearing to any significant forces.

### Summary

An object of the invention is to propose a basic gearbox and a range gearbox with advantageous absorption of the forces which occur during operation.

According to the invention there is provided an arrangement according to claim 1, comprising a range gearbox, e.g. for a motor vehicle, adapted to being connected to a mainshaft at the outside of a basic gearbox and comprising a planetary gear with a sun wheel which is mounted on the mainshaft and has helical external teeth in engagement with planet wheels connected to an output driveshaft, which basic gearbox is surrounded by a housing which has an aperture through which the mainshaft runs, with an outer bearing which is situated at the housing aperture between the mainshaft and the housing and which fixes the mainshaft to the housing while at the same time allowing it to rotate relative to the housing, while the range gearbox has a first gear state in which the sun wheel and the planet wheels do not rotate relative to one another and the rotation of the mainshaft is transmitted directly to the output driveshaft, and a second gear state in which gear changes are achieved by the engagement between sun wheel and planet wheels. The helical external teeth on the sun wheel are so oriented that the axial forces which occur on the mainshaft in a geared forward movement state of the vehicle are directed towards the basic gearbox and that the outer bearing between the mainshaft and the housing aperture is provided with axial support against the housing of the basic gearbox in order to absorb axial forces in the mainshaft which act towards the basic gearbox.

In a first embodiment of the range gearbox, the outer bearing takes the form of an axial bearing, and in a second embodiment of the range gearbox it takes the form of a conical bearing.

The sun wheel may be mounted on the mainshaft by means of splines so that it is in engagement with it in radial directions but can slide in axial directions relative to it, thus being in axial connection with and supported by the outer bearing, to which end the outer bearing has an inner portion firmly connected to the housing of the basic gearbox and an outer portion connected to the sun wheel in order to rotate with the sun wheel and absorb axial forces which act on it towards the basic gearbox.

Alternatively, the sun wheel may be firmly mounted on the mainshaft so that it is in engagement with it in both radial and axial directions relative to it, thus being in axial connection with and supported by the outer bearing, to which end the outer bearing has a radially external portion connected firmly to the housing of the basic gearbox and a radially internal portion connected to the mainshaft in order to rotate with the sun wheel and absorb axial forces which act upon it towards the basic gearbox.

Where appropriate, a rear bearing, preferably in the form of a conical bearing, is provided at the aperture between the mainshaft and the housing, with axial support against the housing of the basic gearbox, in order to absorb axial forces in the mainshaft which act in a direction away from the basic gearbox. The arrangement according to the invention also comprises a basic gearbox. Disclosed herein is an advantageous embodiment of such a basic gearbox, e.g. for a motor vehicle, provided with a surrounding housing in which a mainshaft has its first end connected via a mainshaft forward bearing to an input shaft and its second end running through an aperture in the surrounding housing, with a countershaft arranged to transmit rotation from the input shaft to the mainshaft via various selectable gear ratios, and a mainshaft rear bearing situated between the mainshaft and the housing aperture, with axial support against the housing of the basic gearbox, in order to absorb axial forces in the mainshaft which are directed towards its second end. An outer bearing is provided between the mainshaft and the housing aperture, with axial support against the housing of the basic gearbox, in order to absorb axial forces in the mainshaft which act towards its first end.

In an advantageous embodiment of the basic gearbox, the mainshaft forward bearing is a cylindrical bearing.

In an advantageous embodiment of the basic gearbox the range gearbox described above is situated on the mainshaft outside the housing of the basic gearbox described above. The invention makes it possible for the axial forces which mainly occur in the range gearbox to be absorbed by the gearbox housing while at the same time a substantial portion of them will also be in the opposite direction to the forces which occur in the basic gearbox. Consequently the force absorption in the gearboxes is optimised while at the same time the axial forces which act upon the bearings can be minimised so that the bearings are subject to smaller forces, making it possible for their service life to be longer.

Other embodiments and advantages of the invention are indicated by the detailed description.

### Brief description of the drawings

The invention is described below in detail with reference to the attached drawings, in which:
**Figure 1** depicts a first embodiment of a basic gearbox , with associated countershaft, and a range gearbox according to the invention;
**Figure 2** depicts a first embodiment of a range gearbox according to the invention;
**Figure 3** depicts a second embodiment of a basic gearbox and a range gearbox according to the invention, but including the mainshaft on the basic gearbox;
**Figure 4** is a partial view of the basic gearbox in Figure 3;
**Figure 5** depicts both the second embodiment of the basic gearbox (showing only the mainshaft) and a second embodiment of a range gearbox according to the invention; and
**Figure 6** depicts the range gearbox from Figure 5 in detail.

### Detailed description of preferred embodiments of the invention

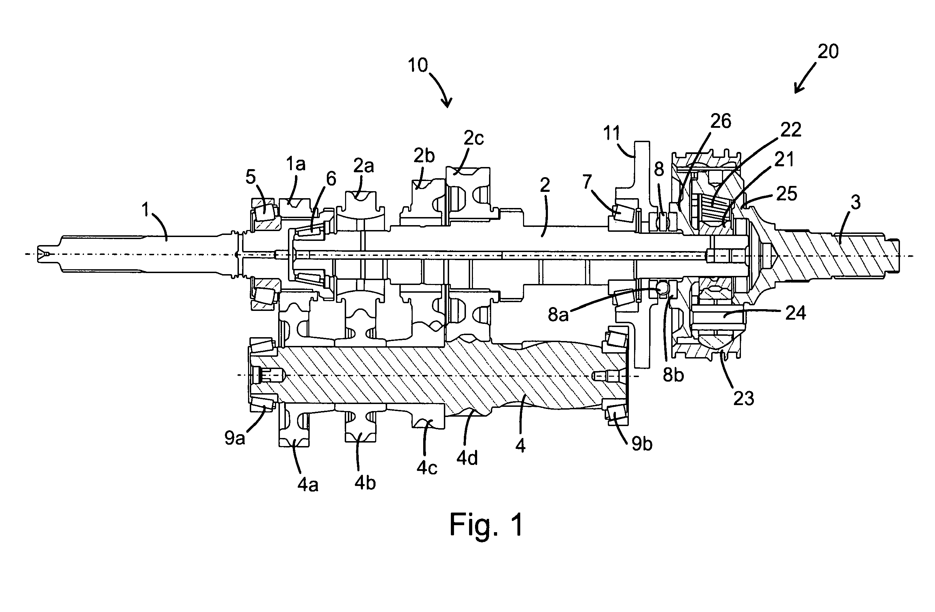

Figure 1 depicts a first embodiment of the invention, comprising a range gearbox 20 situated adjacent to a basic gearbox 10. On the left in the diagram the basic gearbox has an input shaft 1 from which power is transferred via a countershaft 4 to a mainshaft 2 in the middle of the diagram. The power is then passed on via the second gearbox, i.e. the range gearbox 20, to an output shaft 3. The basic gearbox 10 is surrounded by a housing 11 with an aperture 12 through which the mainshaft runs.

Gear ratio change between the shafts takes place in a conventional way known to specialists. Rotation is thus transferred from the input shaft 1 via a pinion 1a mounted on it to a first pinion 4a on the countershaft and thence selectably via any of the other pinions 4b, 4c or 4d to respective pinions 2a, 2b or 2c on the mainshaft 2. A further possible gear combination is the input shaft being connected to the first pinion 2a on the mainshaft, which then rotates freely relative to the mainshaft. The rotation of the first pinion 2a is transmitted via the second pinion 4b to the countershaft 4. Here again the rotation from the countershaft 4 may be transmitted to the mainshaft via the latter's second or third pinions 2b or 2c. The connection may also be made directly via the first pinion 2a to the mainshaft 2 without any driving power being transferred via the countershaft 4. Which pinion is active is controlled by sleeves which can be moved axially to put respective pinions into engagement with respective shafts. Desired gear ratios are arrived at depending on the number of teeth on the various pinions.

Conventionally, all of the shafts are journalled at both ends to keep them in place in such a way as to allow them to rotate and absorb the forces to which they are subject or which occur in them during operation. Transfer of torque from the countershaft 4 to the mainshaft 2 involves forces occurring in three directions in the mainshaft. The largest force is the desired rotational force or torque causing the mainshaft to rotate, the second is the tangential or radial force which is orthogonal to the section plane of the diagram, i.e. it runs straight into or straight out from the diagram, depending on the direction of rotation of the shafts. The third force is in the axial direction, in which forces occur because the teeth of the shafts are helical, imparting a force component in the axial direction.

The angle of the teeth on pinions 2a, 2b and 2c in the embodiment depicted is such as to cause on the mainshaft 2 the axial forces directed to the right in the diagram which are intended to be absorbed by the mainshaft rear bearing 7. Thus the angle of the teeth on pinions 4b, 4c and 4d on the countershaft 4 is such that the axial forces which occur on it act to the right in the diagram during normal operation. The teeth on the pinion 4a are angled in the same direction as those on pinions 4b, 4c and 4d. However, this first pinion 4a is driven in normal operation by pinion 1a on the input shaft instead of driving any of pinions 2a, 2b and 2c on the mainshaft 2, so this pinion 4a gives rise to a force on the countershaft 4 in an opposite direction to those to which the other pinions 4b, 4c and 4d give rise, i.e. to the right in the diagram. The result is axial forces in the first pinion 4a on the countershaft 4 in the opposite direction to whichever of the other pinions 4b, 4c and 4d is driving at the time.

One of the pinions on the mainshaft 2 may be intended for the reverse gear. Such a pinion is thus intended to be connected when the shafts rotate in the opposite direction to that pertaining to the vehicle's normal forward movement. The teeth on such a pinion may therefore be angled in the opposite direction to those on other pinions so that the axial force arising is directed to the right in the diagram irrespective of which pinion is active. The mainshaft rear bearing 7 is therefore usually dimensioned larger to cope with the forces involved. Any forces directed to the left, e.g. during engine braking, are conventionally absorbed by the mainshaft forward bearing 6 and an input bearing 5 in which the input shaft 1 is journalled.

The countershaft 4 is held firmly in a conventional way by conical bearings 9a and 9b at its respective ends. The axial forces which occur in conical bearings vary depending on which pinion is used. If for example the first and second pinions 4a and 4b on the countershaft 4 are connected, radial forces endeavouring to push the countershaft downwards in the diagram will occur at the contact both with pinion 1a on the input shaft 1 and with pinion 2a on the mainshaft 2. These radial forces will be greater at the left bearing 9a than at the right bearing 9b because the first and second pinions 4a and 4b are situated nearer to it. The radial forces will give rise to axial forces directed inwards both at the left bearing 9a and at the right bearing 9b, owing to the conical shape of the bearings. As the radial force is greater at the left bearing, the axial force occurring there will also be greater. This results in the occurrence in this bearing of an axial force component to the right. The magnitude of the axial force depends also on the angle of the conical bearings. If they are cylindrical, no axial components occur, but with increasing cone angle the magnitude of the axial force increases.

Depending on which pinion is connected, this force component will vary both in the countershaft and in the mainshaft, but will be smaller than the axial forces imparted by the helical teeth of the pinions.

In the first embodiment depicted, the input bearing 5 takes the form of a conical bearing adapted to absorbing forces which act to the left on the input shaft. During operation of the input shaft, substantially no forces act upon it. The input bearing 5 is therefore primarily adapted to absorbing forces which occur on the input shaft as a result of its driving connection to the countershaft 4, and forces passed on to the input shaft from the mainshaft 2. All of these forces normally act to the left in the diagram, so the input bearing 5 is adapted to absorbing them. During engine braking, however, forces directed to the right in the diagram will act upon the input shaft 1. Such forces will be significantly smaller than the axial forces which occur during normal operation and may be passed on via the mainshaft forward bearing 6 to the mainshaft and thence to the mainshaft rear bearing 7.

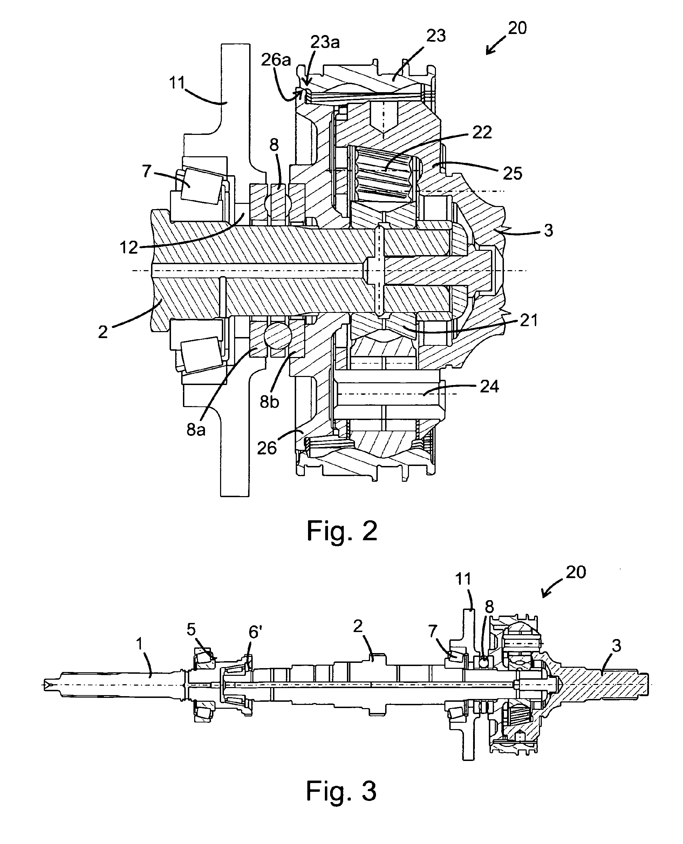

The mainshaft rear bearing 7 is in supportive engagement against the housing 11 which surrounds the basic gearbox 10, so forces which act upon this bearing 7 will effectively be absorbed by the housing 11, see also Figure 2.

According to the invention, however, another bearing is intended to absorb axial forces which act upon the mainshaft 2 to the left in the diagram. This outer bearing 8 is situated between the mainshaft 2 and the housing aperture 12 and is provided with axial support against the housing 11 of the basic gearbox 10 in order to pass on to the housing 11 the axial forces in the mainshaft which act towards the basic gearbox, i.e. to the left in the diagram. This outer bearing 8 makes it possible for the mainshaft forward bearing 6 and the input bearing 5 to be configured with smaller dimensions, since the axial forces which normally act upon them in the configuration according to the invention are instead absorbed by the outer bearing 8.

The outer bearing 8 makes it possible for the range gearbox 20 to be configured in such a way that the forces which occur act primarily to the left, so they can partly absorb the forces which occur in the basic gearbox, but with the advantage that excess forces can be absorbed by the outer bearing 8.

In the first embodiment depicted in Figures 1 and 2, the outer bearing 8 is configured as an axial bearing clamped firmly between the mainshaft 2 and the aperture 12 in the housing 11 of the basic gearbox 10. Figure 2 depicts in detail the range gearbox 20 according to the first embodiment.

The range gearbox 20 comprises a planetary gear with a sun wheel 21 mounted on the mainshaft 2 by internal splines and with helical external teeth in engagement with corresponding helical teeth on a number of planet wheels 22 which are themselves in engagement with a surrounding ring gear 23. The planet wheels are arranged to rotate about their spindles 24 which protrude from a shaft disc 25 which is an extension of the output drive shaft 3.

The range gearbox 20 has a first gear state, depicted in the diagram, in which the sun wheel 21 and the planet wheels 22 do not rotate relative to one another and the rotation of the mainshaft is transferred directly to the output drive shaft 3, and a second gear state in which ratio change is effected by the engagement between the sun wheel 21 and the planet wheels 22 and between the planet wheels 22 and the ring gear 23, and the rotation of the planet wheels 22 about their spindles 24 causes the shaft disc 25 and hence the output drive shaft 3 to rotate at a lower speed than the mainshaft 2.

In the first gear state, a driver 26 situated between the sun wheel 21 and the outer bearing 8 is in engagement with the ring gear 23. Like the sun wheel 21, the driver 26 has internal splines (not depicted) which cause it, like the sun wheel 21, to rotate with the mainshaft, but is free to move in axial directions. This means that the driver 26 when in engagement with the ring gear 23 prevents the planet wheels 22 from rotating, since the ring gear 23 is then locked to rotating at the same speed as the sun wheel 21. In this situation the planet wheels 22 situated between the sun wheel and the ring gear cannot rotate about their spindles 24 but only about the mainshaft 2 and at its speed. The rotation of the mainshaft 2 is thus transmitted via the shaft disc 25 to the output drive shaft 3 with gear ratio change.

In the second gear state, the ring gear 23 is moved to the right in the diagram so that it comes out of engagement with the driver 26 and into firm engagement with the gearbox housing 11 via an undepicted plate which protrudes from the housing. In this situation the ring gear 23 will thus be prevented from rotating. The planet wheels 22 will therefore rotate both about their own spindles 24 and about the mainshaft 2 as a result of their teeth being driven radially internally by the teeth of the sun wheel 21 while they are radially externally in engagement with the teeth on the static ring gear 23. The output drive shaft 3 and the shaft disc 25 connected to it, the rotation of which is driven by the rotation of the planet wheels 22 about the mainshaft 2, will therefore rotate at a definitely lower speed than the mainshaft.

The helical external teeth on the sun wheel 21 are so oriented that the axial forces which occur on the mainshaft 2 in a geared forward movement state of the vehicle are directed towards the basic gearbox 10. As mentioned above, the sun wheel 21 in the first embodiment is mounted on the mainshaft 2 by splines. The splines cause the sun wheel to rotate with the mainshaft but leave it free to move in axial directions relative to it. The axial forces in this embodiment are thus passed on not to the mainshaft 2 but instead to the driver 26 which is, however, also mounted on the mainshaft by splines, so it passes the forces on to the outer bearing 8 adjacent to it on the opposite side.

The outer bearing 8 between the mainshaft 2 and the housing aperture 12 is provided with axial support against the housing 11 of the basic gearbox 10 so that this housing can absorb the axial forces which occur towards the basic gearbox on the sun wheel 21 and are passed on via the driver 26 and the outer bearing 8. In this embodiment the outer bearing may with advantage take the form of an axial bearing which has its right or outer portion 8b connected to the driver 26 in order to rotate with it, and its left or inner portion 8a connected to the housing aperture 12 and therefore not rotating. The axial bearing may be configured with an intermediate space to the mainshaft, since it is not intended to absorb any radial forces. The radial forces are absorbed in a conventional way by the mainshaft rear bearing 7.

Two clear advantages are afforded by the outer bearing 8. The first is that the bearings within the basic gearbox 10, i.e. the input bearing 5 and the mainshaft forward bearing 6, can be dimensioned smaller. This is advantageous in that the space there is limited. The second advantage is that the range gearbox can therefore be configured in such a way that the axial forces which occur in the low-range state may be directed against the forces which occur in the basic gearbox 10. These forces thus counteract one another in a large proportion of operating states, leading to better operation due to more advantageous power absorption, and smaller stresses on all the bearings.

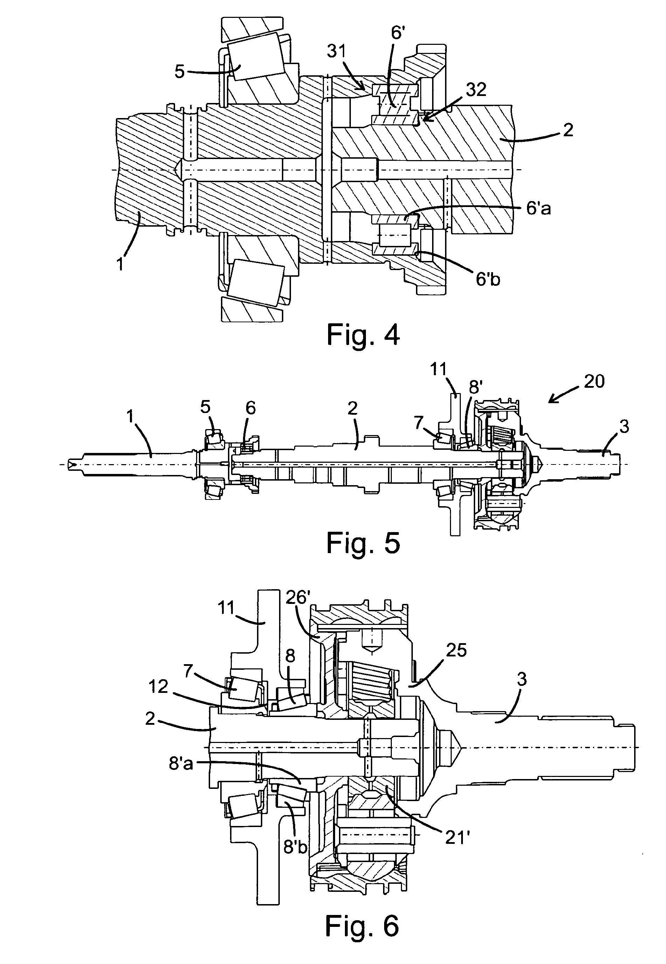

This is primarily an advantage in eliminating the need to absorb axial forces in the mainshaft forward bearing 6. This becomes particularly clear in the gearbox according to the second embodiment depicted in Figures 3 and 4, in which the mainshaft forward bearing 6' takes the form of a cylindrical bearing intended to absorb only radial forces.

To absorb forces from the sun wheel 21 when it is pushed to the right in the diagram, e.g. during engine braking, an undepicted shoulder is provided on the right end of the mainshaft 2 to absorb such forces and prevent the sun wheel from moving to the right. The actual configuration of this shoulder may take a number of different forms which will be obvious to a specialist in the field.

The radial forces are generally greater than the axial forces, but a conventional cylindrical bearing even with relatively small dimensions is well suited to absorbing relatively large radial forces.

As may be seen in Figure 4, however, the axial mainshaft forward bearing 6' is provided with support for the radial internal ring 6'a against a shoulder 32 on the mainshaft 2, and for the radially external ring 6'b against a shoulder 31 on the continuation of the input shaft 1. These shoulders make it possible for the axial forces which still arise to be coped with by the mainshaft axial forward bearing 6'.

In the second embodiment of the range gearbox depicted in Figures 5 and 6, the mainshaft forward bearing 6' is cylindrical as in the first embodiment. However, the outer bearing 8' in this embodiment takes the form of a conical bearing instead of an axial bearing as in the first and second embodiments. Owing to this change, the range gearbox 20 is also configured in an alternative way.

In this second embodiment of the range gearbox, the sun wheel 21' is firmly mounted on the mainshaft 2 so that the axial forces which occur on the sun wheel 21' are at least partly passed on to the mainshaft. Both the driver 26' and the radially internal ring 8'a of the outer bearing are also firmly mounted on the mainshaft. The fact that the outer bearing 8' is conical means that the axial forces which occur on it will be transmitted from the radially internal ring 8'a to the radially external ring 8'b and thence to the gearbox housing 11.

The present invention is not restricted to the embodiments described above. Sundry alternatives, modifications and equivalents may be used. For example, the various embodiments for the two different aspects of the invention may be combined in other ways than as in the embodiments depicted. There are also further possible alternative configurations of the outer bearing 8 or 8'. As well as all the various known types of axial bearings, it is also possible to use a variety of different bearings suited to absorbing both radial and axial forces. The embodiments described are therefore not to be regarded as limiting the invention's protective scope, which is defined instead by the attached claims.

## Claims

1. An arrangement including a range gearbox (20) and a basic gearbox (10), wherein the range gearbox (20) is connected to a mainshaft (2) at the outside of the basic gearbox (10) and comprises a planetary gear with a sun wheel (21, 21') mounted on the mainshaft (2) and having helical external teeth in engagement with planet wheels (22) which are connected to an output driveshaft (3), the basic gearbox (10) is surrounded by a housing (11) which has an aperture (12) through which the mainshaft (2) runs, with at least one bearing (7, 8, 8') situated at the aperture between the mainshaft (2) and the housing and fixing the mainshaft (2) to the housing (11) while at the same time allowing the mainshaft (2) to rotate relative to the housing (11), and the range gearbox (20) having a first gear position in which the sun wheel (21, 21') and the planet wheels do not rotate relative to one another, the rotation of the mainshaft (2) being passed on directly to the output driveshaft (3), and a second gear position whereby ratio change is effected by the engagement between the sun wheel (21, 21') and the planet wheels (22), **characterised in that** the helical external teeth on the sun wheel (21, 21') are so oriented that the axial forces which occur on the mainshaft (2) in a geared forward movement state of the vehicle are directed towards the basic gearbox (10), and that at least one of the bearings (7, 8, 8') is an outer bearing (8, 8') provided with axial support against the housing (11) of the basic gearbox (10) in order to absorb axial forces in the mainshaft (2) which act towards the basic gearbox (10).

2. An arrangement according to claim 1, **characterised in that** the outer bearing (8) takes the form of an axial bearing.

3. An arrangement according to claim 1, **characterised in that** the outer bearing (8') takes the form of a conical bearing.

4. An arrangement according to claim 2, **characterised in that** the sun wheel (21) is mounted on the mainshaft (2) by means of splines so that it is in engagement with it in radial directions but can slide in axial directions relative to it, to which end the sun wheel (21) is in axial connection with and supported by the outer bearing (8) which has an inner portion (8a) firmly connected to the housing (11) of the basic gearbox (10), and an outer portion (8b) connected to the sun wheel (21), in order to rotate with it and absorb axial forces which act upon it towards the basic gearbox (10).

5. An arrangement according to claim 3, **characterised in that** the sun wheel (21') is firmly mounted on the mainshaft (2) so that it is in engagement with it in both radial and axial directions relative to it, to which end the sun wheel (21') is in axial connection with and supported by the outer bearing (8') which has a radial external portion (8'b) firmly connected to the housing (11) of the basic gearbox (10), and a radially internal portion (8'a) connected to the mainshaft (2), in order to rotate with the sun wheel (21') and absorb axial forces which act upon it towards the basic gearbox (10).

6. An arrangement according to any one of the foregoing claims, **characterised in that** a mainshaft rear bearing (7), preferably in the form of a conical bearing, is situated at the aperture (12) between the mainshaft (2) and the housing (11) of the basic gearbox (10), with axial support against the housing (11), in order to absorb axial forces in the mainshaft which act away from the basic gearbox (10).

## Patentansprüche

1. Anordnung, die ein Bereichsgetriebe (20) und ein Grundgetriebe (10) umfasst, wobei das Bereichsgetriebe (20) an der Außenseite des Grundgetriebes (10) mit einer Hauptwelle (2) verbunden ist und ein Planetengetriebe mit einem Sonnenrad (21, 21') umfasst, das an der Hauptwelle (2) angebracht ist und eine schräge Außenverzahnung aufweist, die in Eingriff mit Planetenrädern (22) steht, die mit einer Abtriebswelle (3) verbunden sind, wobei das Grundgetriebe (10) von einem Gehäuse (11) umgeben ist, das eine Öffnung (12) aufweist, durch die die Hauptwelle (2) verläuft, mit wenigstens einem Lager (7, 8, 8'), das an der Öffnung zwischen der Hauptwelle (2) und dem Gehäuse angeordnet ist und die Hauptwelle (2) an dem Gehäuse (11) befestigt, und der Hauptwelle (2) gleichzeitig erlaubt, relativ zu dem Gehäuse (11) zu rotieren, und das Bereichsgetriebe (20) eine erste Getriebestellung aufweist, in der das Sonnenrad (21, 21') und die Planetenräder nicht relativ zueinander rotieren, wobei die Rotation der Hauptwelle (2) direkt zu der Abtriebswelle (3) weitergeleitet wird, und eine zweite Getriebestellung, bei der eine Übersetzungsänderung durch das Eingreifen zwischen dem Sonnenrad (21, 21') und den Planetenrädern (22) bewirkt wird, **dadurch gekennzeichnet, dass** die schräge Außenverzahnung auf dem Sonnenrad (21, 21') derart ausgerichtet ist, dass die axialen Kräfte, die an der Hauptwelle (2) in einem verzahnten Vorwärtsbewegungszustand des Fahrzeugs auftreten, zu dem Grundgetriebe (10) gerichtet sind, und dass wenigstens eines der Lager (7, 8, 8') ein Außenlager (8, 8') ist, das eine axiale Abstützung gegen das Gehäuse (11) des Grundgetriebes (10) aufweist, um die axialen Kräfte in der Hauptwelle (2) aufzunehmen, die in Richtung des Grundgetriebes (10) wirken.

2. Anordnung nach Anspruch 1, **dadurch gekennzeichnet, dass** das Außenlager (8) die Form eines Axiallagers aufweist.

3. Anordnung nach Anspruch 1, **dadurch gekennzeichnet, dass** das Außenlager (8') die Form eines konischen Lagers aufweist.

4. Anordnung nach Anspruch 2, **dadurch gekennzeichnet, dass** das Sonnenrad (21) mittels einer Kerbverzahnung auf der Hauptwelle (2) angebracht ist, sodass es in radialen Richtungen in Eingriff mit dieser steht, aber in axialen Richtungen relativ zu dieser verschiebbar ist, an einem Ende mit dem das Sonnenrad (21) in axialer Verbindung steht und an dem das Sonnenrad (21) durch das Außenlager (8) gelagert ist, das einen inneren Abschnitt (8a) aufweist, der fest mit dem Gehäuse (11) des Grundgetriebes (10) verbunden ist, und einen äußeren Abschnitt (8b) aufweist, der mit dem Sonnenrad (21) verbunden ist, um mit diesem zu rotieren und axiale Kräfte aufzunehmen, die auf dieses in Richtung des Grundgetriebes (10) wirken.

5. Anordnung nach Anspruch 3, **dadurch gekennzeichnet, dass** das Sonnenrad (21') fest an der Hauptwelle (2) angeordnet ist, sodass es sowohl in radialen als auch in axialen Richtungen relativ zu dieser mit dieser in Eingriff steht, an einem Ende mit dem das Sonnenrad (21') in axialer Verbindung steht und an dem das Sonnenrad (21') durch das Außenlager (8') gelagert ist, das einen radialen äußeren Abschnitt (8'b) aufweist, der fest mit dem Gehäuse (11) des Grundgetriebes (10) verbunden ist, und einen radialen inneren Abschnitt (8'a) aufweist, der mit der Hauptwelle (2) verbunden ist, um mit dem Sonnenrad (21') zu rotieren und axiale Kräfte aufzunehmen, die auf dieses in Richtung des Grundgetriebes (10) wirken.

6. Anordnung nach einem der vorhergehenden Ansprüche, **dadurch gekennzeichnet, dass** ein hinteres Hauptwellenlager (7), vorzugsweise in Form eines konischen Lagers, an der Öffnung (12) zwischen der Hauptwelle (2) und dem Gehäuse (11) des Grundgetriebes (10) angeordnet ist, und eine axiale Abstützung gegen das Gehäuse (11) aufweist, um axiale Kräfte in der Hauptwelle aufzunehmen, die von dem Grundgetriebe (10) weg wirken.

## Revendications

1. Agencement comprenant une boîte de vitesses de gammes (20) et une boîte de vitesses de base (10), dans lequel la boîte de vitesse de gammes (20) est reliée à un arbre principal (2) à l'extérieur de la boîte de vitesses de base (10), et comprend un engrenage planétaire avec une roue planétaire (21, 21') montée sur l'arbre principal (2) et comportant des dents externes hélicoïdales en prise avec des satellites (22) qui sont reliés à un arbre d'entraînement de sortie (3), la boîte de vitesses de base (10) est entourée par un boîtier (11) qui comporte une ouverture (12) à travers laquelle s'étend l'arbre principal (2), avec au moins un palier (7, 8, 8') situé à l'ouverture entre l'arbre principal (2) et le boîtier, et fixant l'arbre principal (2) au boîtier (11) tout en permettant en même temps à l'arbre principal (2) de tourner par rapport au boîtier (11), et la boîte de vitesses de gammes (20) comportant une première position d'engrenages dans laquelle la roue planétaire (21,21') et les satellites ne tournent pas les uns par rapport aux autres, la rotation de l'arbre principal (2) étant transmise directement à l'arbre d'entraînement de sortie (3), et une deuxième position d'engrenages par laquelle un changement de rapport est effectué par la mise en prise entre la roue planétaire (21, 21') et les satellites (22), **caractérisé en ce que** les dents externes hélicoïdales de la roue planétaire (21, 21') sont orientées de telle sorte que les forces axiales qui apparaissent sur l'arbre principal (2) dans un état de déplacement en marche avant en prise du véhicule soient dirigées vers la boîte de vitesses de base (10), et **en ce qu'**au moins l'un des paliers (7, 8, 8') est un palier extérieur (8, 8') muni d'un support axial contre le boîtier (11) de la boîte de vitesses de base (10) de façon à absorber des forces axiales, dans l'arbre principal (2), qui agissent vers la boîte de vitesses de base (10).

2. Agencement selon la revendication 1, **caractérisé en ce que** le palier extérieur (8) prend la forme d'un palier axial.

3. Agencement selon la revendication 1, **caractérisé en ce que** le palier extérieur (8') prend la forme d'un palier conique.

4. Agencement selon la revendication 2, **caractérisé en ce que** la roue planétaire (21) est montée sur l'arbre principal (2) à l'aide de cannelures, de telle sorte qu'elle soit en prise avec celui-ci dans des directions radiales mais qu'elle puisse coulisser dans des directions axiales par rapport à celui-ci, à quelle fin la roue planétaire (21) est en liaison axiale avec le palier extérieur (8), qui comporte une partie intérieure (8a) fermement reliée au boîtier (11) de la boîte de vitesses de base (10), et une partie extérieure (8b) reliée à la roue planétaire (21), et est supportée par celui-ci, de façon à tourner avec celle-ci et à absorber des forces axiales qui agissent sur celle-ci vers la boîte de vitesses de base (10).

5. Agencement selon la revendication 3, **caractérisé en ce que** la roue planétaire (21') est fermement montée sur l'arbre principal (2), de telle sorte qu'elle soit en prise avec celui-ci tout à la fois dans les directions radiale et axiale par rapport à celui-ci, à quelle fin la roue planétaire (21') est en liaison axiale avec le palier extérieur (8'), qui comporte une partie externe radiale (8'b) fermement reliée au boîtier (11) de la boîte de vitesses de base (10), et une partie radiale interne (8'a) reliée à l'arbre principal (2), et est supportée par celui-ci, de façon à tourner avec la roue planétaire (21') et à absorber des forces axiales qui agissent sur celle-ci vers la boîte de vitesses de base (10).

6. Agencement selon l'une quelconque des revendications précédentes, **caractérisé en ce qu'**un palier arrière d'arbre principal (7), de préférence sous la forme d'un palier conique, est situé à l'ouverture (12) entre l'arbre principal (2) et le boîtier (11) de la boîte de vitesses de base (10), avec un support axial contre le boîtier (11), de façon à absorber des forces axiales, dans l'arbre principal, qui agissent de façon à s'éloigner de la boîte de vitesses de base (10).
